# EUROPÄISCHE PATENTANMELDUNG

(11) **EP 4 653 112 A1**
(43) Veröffentlichungstag der Anmeldung: **26.11.2025**
(21) Anmeldenummer: 24177453.8
(22) Anmeldetag: 22.05.2024
(51) Int. Cl.: B23B 29/00, E21C 35/18

(54) **VERSCHLEISSSCHUTZELEMENT FÜR EIN TRÄGERWERKZEUG**

(71) Anmelder: CeramTec GmbH, 73207 Plochingen (DE)
(72) Erfinder: Walas, Marius, 59872 Meschede (DE); Höing, Frank, 73102 Birenbach (DE); Sevdic, Nebojsa, 73262 Reichenbach (DE)

(57) **Zusammenfassung**

Die Erfindung betrifft ein Verschleißschutzelement (1) für ein Trägerwerkzeug (2) eines Werkzeugsystems.

Damit das Verschleißschutzelement (1) für Dreh-, Fräs- und Bohranwendungen von metallischen Werkstücken verwendet werden kann, ohne dass es zu Ausfällen des Werkzeugsystems kommt, wird erfindungsgemäß vorgeschlagen, dass das Verschleißschutzelement (1) für Dreh-, Fräs- und Bohranwendungen von metallischen Werkstücken aus einem nichtmetallischen anorganischen Werkstoff besteht.

## Beschreibung

Die Erfindung betrifft ein Verschleißschutzelement für ein Trägerwerkzeug eines Werkzeugsystems.

Aus der DE 11 2010 001 584 B4 ist ein gattungsgemäßes Verschleißschutzelement bekannt, welches an einem drehbaren Trägerwerkzeug bzw. Schneidwerkzeug eines Werkzeugsystems befestigt ist. Das Werkzeugsystem ist für Erdarbeiten vorgesehen und dreht sich in Erdschichten, um diese zu kleineren Stücken zu zerkleinern. Die Erdschichten enthalten feine Teilchen in Form von Schnittfragmenten. Diese Werkzeugsysteme sind Komponenten von Allgemein gesagt Abbaumaschinen. Diese werden im Straßenbau als eine Komponente einer Straßenplaniermaschine oder einer Straßenfräse eingesetzt. Abbaumaschinen werden zu den Baumaschinen gezählt.

Diese Werkzeugsysteme, Abbaumaschinen und Baumaschinen verwenden Schneidspitzenanordnungen, wobei jede Schneidspitzenanordnung für kontinuierliche Abbau- oder Straßenfräsanwendungen in der Regel eine Schneidspitze umfasst, die drehbar in einem Stützblock angebracht ist. Der Stützblock ist wiederum, in der Regel durch Schweißen auf einer Trommel oder einem anderen Körper befestigt, wobei eine geeignete Antriebsquelle (oder ein geeignetes Antriebsmittel) die Trommel antreibt. Wenn mehrere solcher Stützblöcke, die Schneidspitzen tragen, auf einer Trommel befestigt sind und die Trommel angetrieben wird, treffen die Schneidspitzen auf der Erdschicht auf und brechen sie in viele Stücke (zum Beispiel Schnittfragmente) auf.

Im Betrieb der Abbau- oder Baumaschine erfährt der Stützblock Verschleiß aufgrund von seiner Beaufschlagung mit Schnittfragmenten. Im Laufe der Zeit wird der Stützblock aufgrund von Verschleiß und sonstiger rauer Behandlung unwirksam, was auf ein Ende seiner Nutzungsdauer hindeutet. Sobald es dazu kommt, muss der Bediener den Stützblock von der Trommel abschneiden oder mit dem Schneidbrenner abtrennen, damit der Stützblock ersetzt werden kann.

Für den Fachmann ist offensichtlich, dass es zeitaufwendig und somit teuer ist, einen Stützblock zu entfernen und auszutauschen. Somit ist es von Vorteil, wenn die Nutzungsdauer des Stützblocks verlängert werden kann.

Zur Verlängerung der Lebensdauer des Stützblocks kann unter anderem ein Schneidspitzenhalter, manchmal auch als Schneidspitzenhülse bezeichnet, verwendet werden. Von Vorteil sind jedoch besonders Verschleißplatten, die an der Basis montiert ist und wobei der Werkzeughalter eine mittlere Verschleißplatte und ein Paar Verschleißplatten im Zwischenbereich des Werkzeughalters aufweist.

Diese Verschleißplatten bestehen aus Hartkarbidplatten, die in der Kopfbereichschutzfläche vorgesehen sind. Insbesondere weist jeder der lateralen Abschnitte der Kopfbereichschutzfläche eine verschleißfeste Hartkarbidplatte auf. Das Vorsehen der verschleißfesten Hartkarbidplatten stellt eine Verbesserung der Verschleißfestigkeit der Kopfbereichschutzfläche im Vergleich zu einer Kopfbereichschutzfläche ohne zusätzlichen Verschleißschutz dar. Als Beispiel können die Verschleißplatten in entsprechende Aufnahmen in der Kopfbereichschutzfläche hartgelötet (befestigt) werden.

Es wurden Versuche durchgeführt, ein Verschleißschutzelement aus Hartkarbid, gemäß Stand der Technik für Dreh-, Fräs- und Bohranwendungen von metallischen Werkstücken zu verwenden. Es hat sich jedoch gezeigt, dass ein Verschleißschutzelement aus Hartkarbid, gemäß Stand der Technik, zwar als Abdeckung der Fläche und damit als Verschleißschutz des Teils, auf dem das Verschleißschutzelement angeordnet ist, eignet, es jedoch zum Ausfall des Werkzeugsystems kommen kann. Diese Ausfälle fanden nach unterschiedlicher Bearbeitungszeit und nicht reproduzierbar statt, aber waren einerseits u.a. von der Größe des Verschleißschutzelements, dem Ort der Anbringung und der Drehzahl des Werkzeugs abhängig. Hierzu muss gesagt werden, dass bei Dreh-, Fräs- und Bohranwendungen von metallischen Werkstücken wesentlich höhere Drehzahlen des Werkzeugs stattfinden als bei einem Werkzeugsystem nach der DE 11 2010 001 584 B4. Ursächlich für den Ausfall des Werkzeugsystems sind wohl ungewollte Schwingungen am Werkzeughalter. Ausgleichsmassen am Werkzeughalter zur Verringerung von Unwucht führten jedoch nur teilweise zum Erfolg, weil durch sie das Gesamtgewicht anstieg, was wiederum zu Problemen an der Lagerung bzw. am Antrieb führte.

Der Erfindung liegt daher die Aufgabe zugrunde, ein Verschleißschutzelement für ein Trägerwerkzeug eines Werkzeugsystems so zu verbessern, dass es für Dreh-, Fräs- und Bohranwendungen von metallischen Werkstücken verwendet werden kann, ohne dass es zu Ausfällen des Werkzeugsystems kommt.

Erfindungsgemäß wird diese Aufgabe durch die Merkmale des Anspruchs 1 gelöst.

Durch das erfindungsgemäße Verschleißschutzelement wird die Fläche oder das Teil, auf dem das Verschleißschutzelement angeordnet ist, wie im Stand der Technik beschrieben, vor den anfliegenden Spänen bei der Bearbeitung geschützt. Dadurch, dass das Verschleißschutzelement aus einem nichtmetallischen anorganischen Werkstoff besteht, weist es ein geringeres Gewicht auf als ein Verschleißelement nach dem Stand der Technik. Es hat sich unerwartet gezeigt, dass ein geringeres Gewicht bei Dreh-, Fräs- und Bohranwendungen von metallischen Werkstücken, die bei hohen Drehzahlen stattfindet, schon ausreicht, um einen Ausfall des Werkzeugs zu verhindern. Als Folge dieses geringeren Gewichts und damit geringeren Unwucht kommt es zu einer Verringerung von ungewollten Schwingungen, die sich nachteilig auf die Lebensdauer des Trägerwerkzeugs bzw. des Werkzeugsystems auswirken.

In einer bevorzugten Ausführungsform der Erfindung besteht das Verschleißschutzelement aus einem keramischen Werkstoff. Keramische Werkstoffe haben eine hohe Härte bei zugleich geringem Gewicht. Dadurch haben die Verschleißschutzelemente eine längere Einsatzzeit bzw. Laufdauer, weil der Verschleiß der Verschleißschutzelemente an sich verringert ist. Durch das geringe Gewicht der erfindungsgemäßen Verschleißschutzelemente kommt es zu keinem Ausfall des Werkzeugs auch bei hohen Drehzahlen des Werkzeugs.

In einer bevorzugten Ausführungsform besteht der keramische Werkstoff aus einem der folgenden Werkstoffe: SiSiC, Al2O3, ZTA, Sialon, Si3N4. Die Härte dieser Werkstoffe nimmt der Reihe nach ab, wobei SiSiC die höchste Härte und Si3N4 die niedrigste Härte aufweist. Unter SiSiC versteht der Fachmann ein mit Silizium infiltriertes Siliziumcarbid, es handelt sich also um einen Kompositwerkstoff der zum Großteil aus dem bis zu 2700 HV harten Siliziumcarbid, aber auch einen Anteil an etwa 1200 HV hartem Silizium und/oder Silizium basierten Legierungen besteht. Aufgrund seiner hohen Härte ist SiSiC der am besten geeignete Werkstoff für Verschleißschutzelemente. Betrachtet man die Härte der oben genannten keramischen Werkstoffe folgt danach Al2O3, d.h. Aluminiumoxid, danach ZTA, d.h. Zirkonoxid-verstärkte Aluminiumoxidkeramik, danach Sialon Werkstoffe und danach Si3N4, d.h. Siliziumnitrid mit der niedrigsten Härte. Der besondere Vorteil dieser Werkstoffe, neben der Härte, ist ihre Eigenschaft, dass mit ihnen Verschleißschutzelemente im 3-D-Druckverfahren hergestellt werden können. Dadurch können sehr komplexe Strukturen und Designs hergestellt werden (siehe hierzu auch weiter unten).

In einer weiteren bevorzugten Ausführungsform besteht der keramische Werkstoff aus einem SiSiC-Werkstoff mit einem Silizium Anteil zwischen 10-30 Gewichtsprozent, besonders bevorzugt mit einem Silizium Anteil zwischen 12-20 Gewichtsprozent. Dadurch wird sichergestellt, dass sich der Werkstoff über das bevorzugte 3-D-Druckverfahren hergestellt werden kann, die Härte des Kompositwerkstoffs aber noch immer hoch genug ist um den angestrebten Verschleißschutz zu gewährleisten.

In einer anderen bevorzugten Ausführungsform besteht der keramische Werkstoff aus polykristallinem kubischen Bornitrid, weil dessen Härte noch höher ist als SiSiC. Von Nachteil ist jedoch, dass derzeit polykristallines kubisches Bornitrid nicht für das 3-D-Druckverfahren geeignet ist. Außerdem ist es teuer.

Vorteilhafterweise weist der keramische Werkstoff eine Härte von 1200 bis 2700 HV auf, wodurch die Verschleißschutzelemente wenig Abrieb im Einsatz zeigen und dadurch eine lange Standzeit aufweisen. Abrieb ist auch deswegen zu vermeiden, da die abgeriebenen oder abgeschlagenen Teile der Verschleißschutzelemente das Trägerwerkzeug beschädigen können.

Das Verschleißschutzelement kann eine Schutzplatte oder eine Beschichtung auf dem Werkzeug sein. Unter einer Schutzplatte wird allgemein ein Anbaugegenstand für das Trägerwerkzeug verstanden. Eine Beschichtung kann mit allen technischen und chemischen Verfahren aufgebracht werden. Keramik lässt sich sehr gut als Beschichtung aufbringen.

Wenn das Verschleißschutzelement eine Trägerplatte ist, so ist diese bevorzugt am Trägerwerkzeug durch eine oder mehrere der nachfolgenden Befestigungsarten verbunden: Einpressen, Einschrumpfen, Löten, Schweißen, Kleben, Verschraubung.

In einer erfindungsgemäßen Ausführungsform wird das Verschleißschutzelement im 3-D-Druck Verfahren hergestellt. Durch den additiven Prozess, bei dem das Verschleißschutzelement Schicht für Schicht aus dem Rohmaterial aufgebaut wird, entsteht weniger Abfall. Das ist nicht nur umweltfreundlich, sondern spart auch Ressourcen. Im Gegensatz zu anderen Fertigungsverfahren entfallen beim 3D-Druck die Kosten für die Herstellung von Werkzeugen. Das bedeutet, dass auch kleine Stückzahlen und individuelle Verschleißschutzelemente ohne hohe Fixkosten produziert werden können. Da keine Werkzeuge benötigt werden, spart der 3D-Druck Zeit bei der Herstellung der Verschleißschutzelemente. Dies ermöglicht schnelle Änderungen und Anpassungen im Design der Verschleißschutzelemente und eignet sich daher besonders für Prototypen, Marktanalysen oder Kleinserien. Mit dem 3D-Druck können sehr komplexe Strukturen und Designs hergestellt werden.

Ein erfindungsgemäßes Trägerwerkzeug für ein spanabhebendes Werkzeugsystem zur Aufnahme mindestens einer Schneidvorrichtung mit einer Schneidplatte und ggf. einer Stützplatte und einem Spannelement, welches auf dem Trägerwerkzeug über eine Spannschraube befestigbar ist und im befestigten Zustand die Schneidplatte in einen Plattensitz auf dem Trägerwerkzeug drückt und mit einem Verschleißschutzelement nach einem der Ansprüche 1 bis 10 ist dadurch gekennzeichnet, dass das Verschleißschutzelement im Bereich der Schneidplatte am Trägerwerkzeug angeordnet ist. Besonders dieser Bereich ist anfällig für Verschleiß und muss daher geschützt werden.

Wenn am Trägerwerkzeug zwei Schneidvorrichtungen angeordnet sind, ist vorteilhafterweise zumindest ein Verschleißschutzelement zwischen den Schneidvorrichtungen angeordnet, um diesen hochbelasteten Bereich zu schützen. Bevorzugt werden alle verschleißanfälligen Bereiche am Trägerwerkzeug mit Verschleißschutzelementen geschützt.

In einer bevorzugten Ausführungsform sind die beiden Schneidvorrichtungen im Wesentlichen rechtwinklig zueinander angeordnet, wodurch die Bearbeitung der Werkstücke wesentlich erleichtert ist.

Nachfolgend wird die Erfindung anhand von Figuren weiter erläutert.

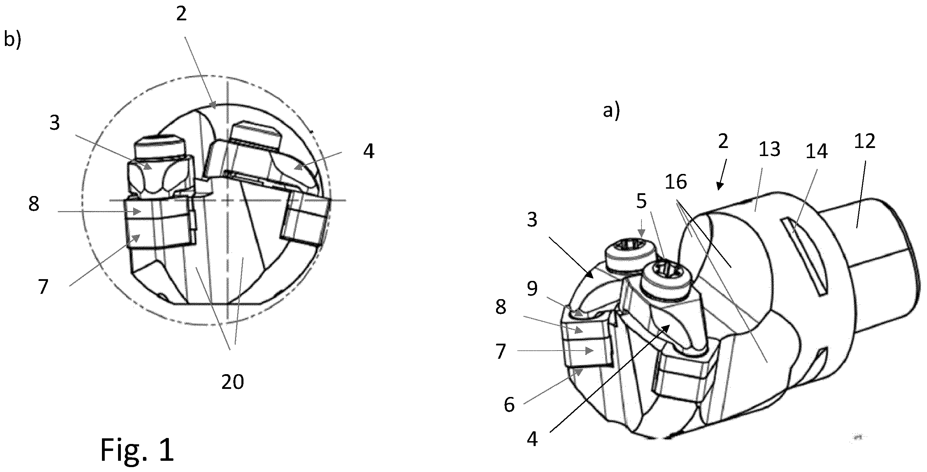

Figur 1a zeigt ein Trägerwerkzeug 2 ohne ein Verschleißschutzelement 1 und mit zwei Schneidvorrichtungen, die jeweils mindestens aus einem Spannelement 3, einer Spannschraube 5, einer Schneidplatte 8 und gegebenenfalls einer Stützplatte 7 bestehen. Das Trägerwerkzeug 2 ist einstückig aufgebaut und weist an seinem der Schneidvorrichtung abgewandten Ende ein Halteelement 12 auf mit dem das Trägerwerkzeug 2 im Werkzeug einspannbar ist. In der hier gezeigten Ausführungsform ist das Halteelement 12 als Vierkant ausgebildet. In Richtung zur Schneidvorrichtung geht das Halteelement 12 in eine scheibenförmige Umfangserweiterung 13 über, auf deren Umfangsfläche sich Einkerbungen 14 zur Anlage eines Einsetzwerkzeugs befinden.

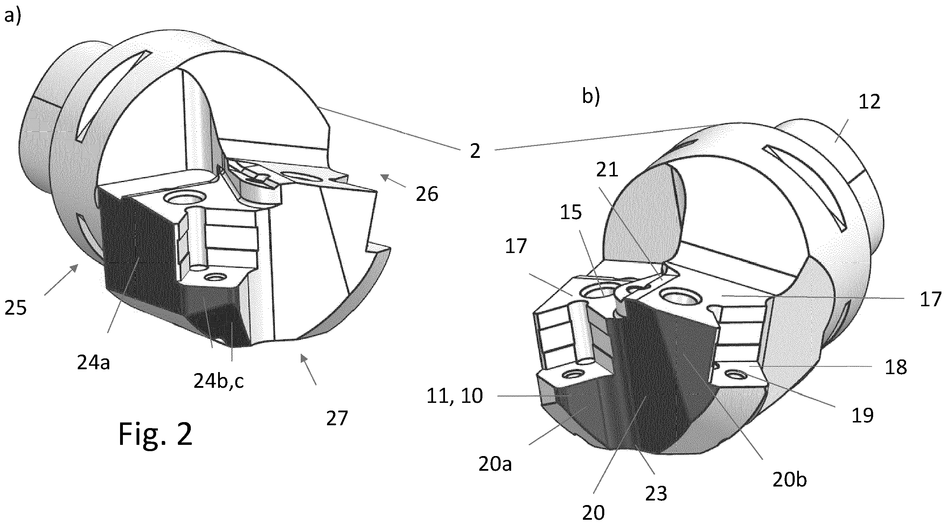

Die Umfangserweiterung 13 geht in Richtung zu den Schneidvorrichtungen über Flanken 16 in jeweils eine Montagefläche 17 (siehe Figuren 2 bis 4) für jede Schneidvorrichtung über. An jede Montagefläche 17 angrenzend erstreckt sich eine Plattenausnehmung oder auch Plattensitz 6 genannt rechtwinklig zur Montagefläche 17 in das Material des Trägerwerkzeugs 2 hinein mit einem in diesem Fall rechteckigen Plattensitzboden 18 mit einer Einbuchtung 19 (siehe Figuren 2 bis 4). Auf diesem Plattensitzboden 18 sitzt die Stützplatte 7 auf, wobei sie an ihrer zum Plattensitzboden 18 gewandten Unterseite ein hier nicht gezeigtes Eingreifelement aufweist, welches in die Einbuchtung 19 (siehe Figuren 2 bis 4) eingreift, um ein verrutschen zu verhindern. Auf der Stützplatte 7 liegt die Schneidplatte 8 auf. Sowohl die Stützplatte 7 als auch die Schneidplatte 8 liegen an der Wand des Plattensitzes 6 an. Die Stirnfläche des Trägerwerkzeugs 2 bilden Prallflächen 20.

Das Trägerwerkzeug 2 besteht bevorzugt aus den Werkstoffen Vergütungsstahl oder Warmarbeitsstahl.

Zur Befestigung der Schneidplatte 8 auf dem Trägerwerkzeug 2 ist ein Spannelement 3, 4 auf dem Trägerwerkzeug 2 über eine Spannschraube 5 befestigt. Die Spannschraube 5 durchragt das Spannelement 3, 4 und ist in eine Spannelementbohrung 15 (siehe Figuren 2 bis 4) auf dem Trägerwerkzeug 2 eingeschraubt.

Beim Eindrehen der Spannschraube 5 drückt die Spitze des Spannelements 3, 4 auf die Schneidplatte 8. Bei Verwendung einer Schneidplatte 8 mit einer Spannmulde 9 ist an der zur Schneidplatte 8 gewandten Unterseite des Spannelements 3, 4 ein als Nocken oder als Sichel ausgeformtes Eingreifelement angeordnet. Dieses Eingreifelement greift in die Spannmulde 9 ein und verankert diese dadurch auf dem Trägerwerkzeug 2. Das Eingreifelement kann über die Form als Nocken oder Sichel hinaus im Prinzip jede denkbare Gestalt haben, auch ein Spannelement 3, 4 ohne Eingreifelement (also Glatt) ist möglich. Bei Verwendung eines Spannelements 3, 4 ohne Eingreifelement ist aber kein Rückzug der Schneidplatte gegeben. Der Rückzug wird weiter unten beschrieben.

In einer bevorzugten Ausgestaltung weist die Schneidplatte 8 bzw. die Schneidplatten 8 eine kreisförmige Spannmulde 9 auf in der eine kugel- bzw. kreisförmige Erhebung angeordnet ist. Der höchste Punkt der Erhebung ist oberhalb des Bodens der Spannmulde 9 und unterhalb der Schneidplattenoberseite, bzw. unterhalb der Spanfläche angeordnet. Bevorzugt ist koaxial zur ersten Spannmulde 9 eine zweite Spannmulde angeordnet, wobei die erste Spannmulde 9 tiefer als die zweite Spannmulde und beide tiefer als die Schneidplattenoberseite angeordnet sind. Hierdurch ist der Höhenabstand der ersten Spannmulde 9 zur zweiten Spannmulde immer derselbe, auch bei einer Schleif- oder Läppbearbeitung der Schneidplattenoberseite.

Der oben genannte Rückzug der Schneidplatte 8 beim Befestigen des Spannelements 3, 4 wird dadurch erreicht, dass am hinteren Ende des Spannelements 3, 4 von der Schneidplatte 8 aus gesehen, eine Rückzugsschräge angeordnet ist und sich auf dem Spannelement 3, 4 eine an die Rückzugsschräge angepasste Abrutschschräge 21 befindet. Wird das Spannelement 3, 4 mit der Spannschraube 5 befestigt, rutscht die Abrutschschräge 21 auf der Rückzugsschräge ab, bis die zur Schneidplatte 8 gewandte Wandung der Spannelementbohrung 15 an der Spannschraube 5 anliegt. Dadurch ist der Abstand von der Längsachse der Spannschraube 5 zum Zentrum der Schneidplatte 8 immer gleich groß.

Figur 1b zeigt das Trägerwerkzeug 2 mit den befestigten Schneidwerkzeugen von der Stirnseite. Gut zu erkennen sind die beiden rechtwinklig zueinander angeordneten Schneidwerkzeuge mit ihren Spannelementen 3, 4, Schneidplatten 8, Stützplatten 7 und die Spannschrauben 5. Die zwischen den beiden Schneidvorrichtungen angeordneten Prallflächen 20 können beliebig ausgebildet sein.

In den Figuren 2 bis 4 sind jeweils verschiedene Ansichten eines erfindungsgemäßen Trägerwerkzeugs 2 gezeigt. Das in den Figuren 2 bis 4 gezeigte erfindungsgemäße Trägerwerkzeug 2 unterscheidet sich vom Trägerwerkzeug gemäß Figur 1 ausschließlich darin, dass an den zu schützenden Flächen Verschleißschutzelemente 1 angeordnet bzw. angebracht sind. Die verwendeten Schneidwerkzeuge sind in diesen Figuren zur besseren Übersicht nicht gezeigt, sind aber mit den Schneidwerkzeugen gemäß Figur 1 identisch. Gleiche Bezugszeichen bezeichnen gleiche Gegenstände.

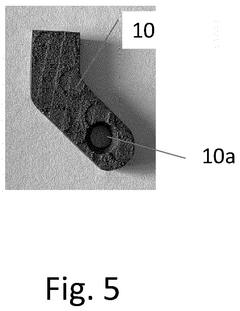

Die in diesen Figuren gezeigten Verschleißschutzelemente 1 können Schutzplatten 10 (siehe Figur 5) oder Beschichtungen 11 sein.

In Figur 2b sind die Verschleißschutzelemente an oder auf allen Prallflächen 20 (siehe auch Figuren 1a, 1b) zwischen den beiden Schneidvorrichtungen angeordnet. Es können auch nur Teilbereiche dieser Prallflächen 20 mit den Verschleißschutzelementen bedeckt sein. In der hier gezeigten Ausführungsform bestehen die Prallflächen 20 aus im Wesentlichen zwei Flächen 20a, 20b, die über eine Verrundung 23 miteinander verbunden sind und nahezu rechtwinklig voneinander abstehen.

In Figur 2a sind die Verschleißschutzelemente auf allen linken Seitenflanken 24a, 24b, 24c des Trägerwerkzeugs 2 angeordnet. Mit linker Seite 25 ist von vorne auf die Stirnfläche 27 gesehen die linke Seite und mit rechter Seite 26 die von vorne auf die Stirnfläche 27 gesehene rechte Seite gemeint. In Figur 2a ist dies markiert. Die Seitenfläche 24a erstreckt sich nahezu rechtwinklig zur Montagefläche 17 auf der sich auch eine Spannelementbohrung 15 befindet. Die Seitenflächen 24b, 24c sind unterhalb des Plattensitzes 6 angeordnet. Zu den Bezugszeichen siehe auch die anderen Figuren. Alle gezeigten Trägerwerkzeuge 2 sind bis auf die Verschleißschutzelemente identisch.

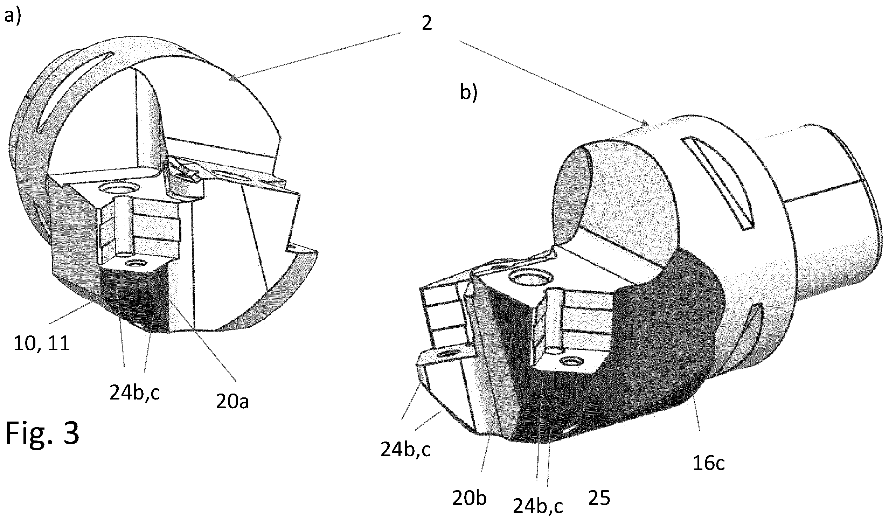

In Figur 3a sind Verschleißschutzelemente auf den Flächen 20a, 24b, 24c des Trägerwerkzeugs 2 angeordnet (siehe hierzu Figuren 2a, 2b). In Figur 3b sind Verschleißschutzelemente auf den Flächen 20b und 24b angeordnet, außerdem auch auf der Flanke 16c (siehe Figur 1a). Es sei betont, dass alle genannten Flächen bevorzugt mit Verschleißschutzelementen bedeckt sind und diese vom Fachmann je nach der Belastung auszuwählen sind.

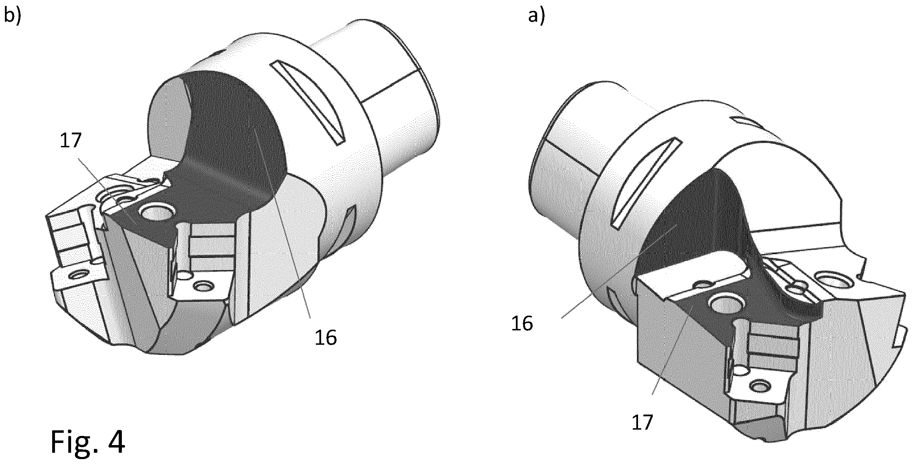

In den Figuren 4a, 4b sind Verschleißschutzelemente auf den Montageflächen 17 und angrenzenden Flächen angeordnet und erstrecken sich bis zu den angrenzenden Flanken 16. Die Abrutschschräge 21 ist vom Schutz durch Verschleißschutzelemente ausgenommen.

Figur 5 zeigt eine beispielhafte Schutzplatte 10. Derartige Schutzplatten weisen bevorzugt eine Länge und Breite von mindestens 10 mm, eine Länge und Breite von maximal 75 mm, eine Dicke von 2 - 15 mm und eine Härte von 1200 - 2700 HV auf. Mit dem Bezugszeichen 10a ist eine durchgehende Bohrung bezeichnet, mit der über eine nicht gezeigte Schraube die Schutzplatte 10 am Trägerwerkzeug befestigt werden kann.

### Bezugszeichenliste:

| | |
|---|---|
| 1 | Verschleißschutzelement |
| 2 | Trägerwerkzeug |
| 3 | Spannelement |
| 4 | Spannelement |
| 5 | Spannschraube |
| 6 | Plattenausnehmung, Plattensitz |
| 7 | Stützplatte |
| 8 | Schneidplatte |
| 9 | Spannmulde |
| 10 | Schutzplatte |
| 11 | Beschichtung |
| 12 | Halteelement |
| 13 | Umfangserweiterung |
| 14 | Einkerbungen |
| 15 | Spannelementbohrung |
| 16 | Flanken |
| 17 | Montagefläche |
| 18 | Plattensitzboden |
| 19 | Einbuchtung |
| 20 | Prallfläche |
| 21 | Abrutschschräge |
| 22 | Kreis |
| 23 | Verrundung |
| 24 | Seitenflanke a, b, c |
| 25 | Linke Seite |
| 26 | Rechte Seite |
| 27 | Stirnfläche |

## Patentansprüche

1. Verschleißschutzelement (1) für ein Trägerwerkzeug (2) eines Werkzeugsystems, **dadurch gekennzeichnet, dass** das Verschleißschutzelement für Dreh-, Fräs- und Bohranwendungen des Werkzeugsystems von metallischen Werkstücken aus einem nichtmetallischen anorganischen Werkstoff besteht.

2. Verschleißschutzelement (1) nach Anspruch 1, **dadurch gekennzeichnet, dass** das Verschleißschutzelement (1) aus einem keramischen Werkstoff besteht.

3. Verschleißschutzelement (1) nach Anspruch 2, **dadurch gekennzeichnet, dass** der keramische Werkstoff aus einem der folgenden Werkstoffe besteht:
SiSiC - höchste Härte
Al2O3
ZTA
Sialon
Si3N4 - niedrigste Härte

4. Verschleißschutzelement (1) nach Anspruch 2, **dadurch gekennzeichnet, dass** der keramische Werkstoff aus kubischen Bornitrid besteht.

5. Verschleißschutzelement (1) nach einem der Ansprüche 1 bis 3, **dadurch gekennzeichnet, dass** der keramische Werkstoff eine Härte von 1200 bis 2700 HV aufweist.

6. Verschleißschutzelement (1) nach einem der Ansprüche 1 bis 5, **dadurch gekennzeichnet, dass** das Verschleißschutzelement (1) eine Schutzplatte (10) oder eine Beschichtung (11) ist.

7. Verschleißschutzelement (1) nach einem der Ansprüche 1 bis 6, **dadurch gekennzeichnet, dass** das Verschleißschutzelement (1) am Trägerwerkzeug (2) bevorzugt durch eine oder mehrere der nachfolgenden Befestigungsarten verbunden ist: Einpressen, Einschrumpfen, Löten, Schweißen, Kleben, Verschraubung.

8. Verschleißschutzelement (1) nach einem der vorhergehenden Ansprüche, **dadurch gekennzeichnet, dass** das Verschleißschutzelement (1) im 3-D-Druck Verfahren hergestellt wird.

9. Trägerwerkzeug (2) für ein spanabhebendes Werkzeugsystem zur Aufnahme mindestens einer Schneidvorrichtung mit einer Schneidplatte (8) und ggf. einer Stützplatte (7) und einem Spannelement (3, 4), welches auf dem Trägerwerkzeug (2) über eine Spannschraube (5) befestigbar ist und im befestigten Zustand die Schneidplatte (8) in einen Plattensitz (6) auf dem Trägerwerkzeug (2) drückt und mit einem Verschleißschutzelement (1) nach einem der Ansprüche 1 bis 8, **dadurch gekennzeichnet, dass** das Verschleißschutzelement (1) im Bereich der Schneidplatte (8) am Trägerwerkzeug (2) angeordnet ist.

10. Trägerwerkzeug nach Anspruch 9 mit zwei Schneidvorrichtungen, **dadurch gekennzeichnet, dass** das Verschleißschutzelement (1) zwischen den Schneidvorrichtungen angeordnet ist.

11. Trägerwerkzeug nach Anspruch 10, **dadurch gekennzeichnet, dass** die beiden Schneidvorrichtungen im Wesentlichen rechtwinklig zueinander angeordnet sind.
